# EUROPEAN PATENT SPECIFICATION

(11) **EP 3 943 304 B1**
(45) Date of publication and mention of the grant of the patent: **24.04.2024**
(21) Application number: 21382621.7
(22) Date of filing: 08.07.2021
(51) Int. Cl.: B32B 41/00, B41F 19/06, B44B 5/02, B32B 38/18, B60R 13/10

(54) **PORTABLE LAMINATING MACHINE FOR HOT STAMPING LICENSE PLATES**
TRAGBARE LAMINIERMASCHINE ZUM HEISSPRÄGEN VON NUMMERNSCHILDERN
MACHINE DE STRATIFICATION PORTABLE POUR L'ESTAMPAGE À CHAUD DE PLAQUES D'IMMATRICULATION

(30) Priority: 23.07.2020 ES 202030769
(43) Date of publication of application: 26.01.2022
(73) Proprietor: INDUSTRIAS SAMAR'T, S.A., 17600 Figueres (Girona) (ES)
(72) Inventor: SÁNCHEZ CASADEVALL, Enrique, 17600 FIGUERES (ES)
(74) Representative: Munoz Garcia, Antonio

(56) References cited:
- EP-B1- 1 074 385
- CN-A- 105 329 689
- CN-A- 105 346 214
- CN-B- 105 328 983

## Description

### OBJECT OF THE INVENTION

As expressed in the title of the present specification, the invention relates to a portable laminating machine for hot stamping license plates, providing the advantages and features described in detail below to the intended function, representing an improvement in the current state of the art.

More specifically, the object of the invention focuses on a machine of a portable nature applicable for hot stamping characters on license plates, particularly for stamping alphanumerical characters or signs, which may have been previously embossed on the plate, by means of temperature and pressure transmission through a bag or film containing dyes, paints, or heat-transferable metalized compounds, based on the lamination of the plate and the bag or film between rollers.

### FIELD OF APPLICATION OF THE INVENTION

The field of application of the present invention is comprised within the sector of the industry dedicated to the manufacture of plates, in particular license plates for vehicles, particularly focusing on the field of machines for hot stamping characters and signs on said plates.

### BACKGROUND OF THE INVENTION

License plates are known to be made by means of embossing, with machines or devices consisting of embossing dies, identifying characters on the starting reflective aluminum plate, often including a peripheral rim, and subsequently hot stamping the upper part of the embossment, and where appropriate, the peripheral rim, by means of the application of heat-transferable dye impregnated in a film which is placed on the already embossed plate, through a hot stamping machine which applies pressure and heat in a controlled manner on said assembly of embossed plate and film with dye.

The objective of the present invention therefore relates to a machine of said type which, unlike the equipment known today, generally consisting of fixed equipment having large dimensions, a high economic cost, and a complex construction, as well as having a high need for maintenance and being hard to handle for those who are inexperienced, consists of a machine of a portable nature which has a simplified mechanism, is easy to maintain, and particularly easy to handle, which machine is furthermore particularly designed, though not constituting a limitation, for use thereof by means of a method for producing and painting embossed characters on license plates using a heat-transferable tubular film.

Moreover, and in reference to the current state of the art, it must be pointed out that, patent CN105328983B is known as the closet document and it relates to an adjustable license plate heat transfer printer film pressing assembly which is made of a simple and easy-to-use structure which, despite including a housing with a heating wire on an upper roller and a system for adjusting the position of said roller, represents, however, a much more complex mechanism which, in addition to not being expressly portable, is also not motor-driven and does not allow easy access to heatable parts, and all this makes it completely different from the machine herein proposed.

Document CN 105 329 689 A is also known and it relates to a winding assembly of the license plate font color thermal transfer printer which, despite being a machine that includes a motor-driven roller, said roller is but the take-up roller of the winding assembly, i.e., it does not have the same function as the laminating machine of the application, given that it is for winding. From EP 1 074 385 B1, there is known an apparatus for making a decal assembly, feed roll, and cartridge used in said apparatus which, despite having certain similarities, is clearly a completely different apparatus which is not applicable for license plates, and not portable in any case, nor does it have any heating means.

And from document CN 105 346 214 A, there is also known another guiding device for a heat transfer license plate printing machine which, like the preceding inventions, is very different from the one herein proposed.

### DISCLOSURE OF THE INVENTION

The portable laminating machine for hot stamping license plates proposed by the invention allows satisfactorily meeting the objectives indicated above, with the characterizing details making it possible and distinguishing same being suitably described in the final claims accompanying the present description

As mentioned above, the invention proposes a machine of a portable nature applicable for hot stamping characters on license plates, in particular for stamping alphanumerical characters or signs included in said plates which may be smooth or have been previously subjected to an embossing process for creating embossed characters or signs, by means of temperature and pressure transmission through a bag or film containing dyes, paints, or heat-transferable metalized compounds.

To that end, and more specifically, the machine of the invention, formed as a light, compact structure of a portable nature having a size and weight such that it can be handled manually for placement thereof on the surface of a table at the time of use, essentially comprises a metallic frame in which there are coupled an upper base with a flat plastic surface, and a metallic side base constituting a laminating housing incorporating therein, protected by a lid, at least one main silicone roller rotating when actuated by a motor and thermal resistors which, when turned on through the corresponding switch and upon reaching the required temperature, suitably controlled through a sensor, heat up the roller, causing the transfer of the dye incorporated in the film when said film, attached to the license plate, is passed between said heated main roller and a secondary laminating roller.

The machine further comprises a roller position adjustment mechanism for adjusting the gap between the rollers based on the thickness of the plate, as appropriate in each case, and also an auxiliary end roller preventing the plate from wobbling as it exits the machine through the opposite end.

### DESCRIPTION OF THE DRAWINGS

To complement the description being made and for the purpose of helping to better understand the features of the invention, a set of drawings is attached to the present specification as an integral part thereof, in which the following is depicted in an illustrative and non-limiting manner:
Figure 1 shows a perspective view of an embodiment of the portable laminating machine for hot stamping license plates object of the invention, where its general external configuration and main parts can be seen.
Figure 2 shows a perspective view of the machine of the invention, similar to that shown in Figure 1, in this case depicted with the lid covering the housing for the rollers in a lifted position, where the essential elements incorporated in said housing can be seen.

### PREFERRED EMBODIMENT OF THE INVENTION

In view of the mentioned figures and according to the numbering used, there can be observed therein a non-limiting embodiment of the machine of the invention, which comprises that which is indicated and described in detail below.

Therefore, as can be seen in said figures, the machine at hand, formed as a structure of a portable nature, essentially comprises a metallic frame (1) with a rectangular prismatic configuration in which there are coupled an upper base (11) having a flat surface and made of a plastic material for positioning the plate to be stamped (not depicted), and a metallic side base (6) constituting a laminating housing comprising therein, protected by a first collapsible lid (8), at least one main laminating roller (14), the surface of which is made of silicone and which rotates when actuated by a motor (10) suitably coupled to one end thereof and provided with a switch (5), and thermal resistors (13) which are coupled on the inner face of the lid (8) such that they cover the roller (14) when the lid (8) is in a closed position and which heat up said main roller (14) when a second switch (4) to which they are connected is actuated, the temperature of said main roller being controlled through a temperature controller (2) and a temperature sensor (17) located next to said roller (14).

The machine further comprises a second laminating roller (15) or secondary roller, located below the main laminating roller (14), to which there is furthermore linked a height adjustment mechanism (16) which allows changing the gap between both rollers (14, 15) as appropriate in each case.

Preferably, the machine further comprises an auxiliary roller (7) which, by being located on the side of the laminating side base (6) through which the plate exits, i.e., the side opposite the side of the upper base through which said plate is inserted to start stamping, prevents the plate from wobbling as it exits the machine through the opposite end.

Therefore, the operation of the machine is as follows:
To begin with, the first switch (5) putting into operation the motor (10) which causes the main roller (14) to rotate and the second switch (4) turning on the thermal resistors (13) must be actuated simultaneously. By means of the temperature controller (2), the setpoint temperature is adjusted and is allowed to be reached. The actual temperature can be seen on the display of said controller a result of the sensor (17) arranged after the main roller (14).

The resistors (13) and the motor (10) must be turned on at the same time because if only the resistors (13) are turned on, the roller (14), which is made with an outer silicone coating, would deform (expand) at the area closest to the resistors (13). In contrast, by causing said roller to rotate, the temperature is uniformly distributed throughout the entire surface thereof, and this is what is sought in order to enable laminating and transferring the heat-transfer dye.

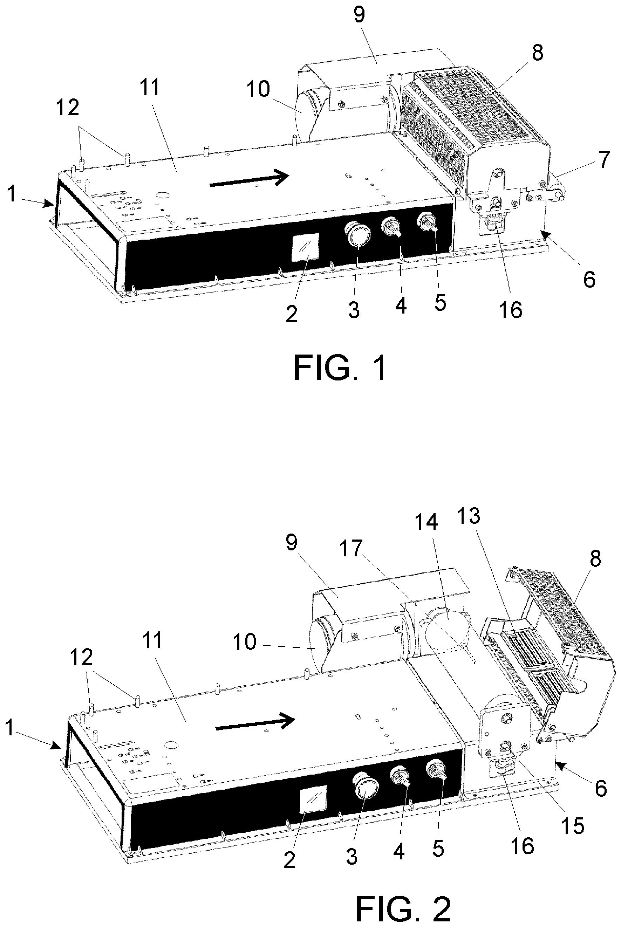

Once the roller (14) is at the desired temperature, the plate is positioned on the upper base (11). The plate must be arranged inside the bag or placed against the film with the dye, paint, or heat-transferable component with which the numbers and/or letters and/or signs are to be painted. The plate, which may or may not have said numbering previously embossed, is supported along with said bag or film with the dye on the flat surface of the upper base (11) of the machine and moved slightly closer to the main roller (14), pushing it from the end opposite the end of the roller (14) in the direction of the arrow incorporated in Figures 1 and 2.

Upon contacting the hot roller (14) and being pressed between said roller (14) and the secondary roller (15), the bag or film with the dye will transfer the color of the dye to the plate and, where appropriate, to the embossed surfaces. The plate will exit the laminating machine through the opposite side and will not wobble as a result of the metallic auxiliary roller (7).

Once the production of the plate or plates has ended, the machine must be stopped. To that end, preferably, it is advisable to open the lid (8) covering the roller (14) and incorporating the thermal resistors (13) and leave it open until it cools down. Furthermore, the resistors (13) are turned off by means of switch (4) and the motor (10) is stopped by means of switch (5).

It is important to highlight that a stop button (3) stopping the motor (10) and turning off the thermal resistors (13) is provided for stopping the machine in case of an emergency.

Likewise, it should be pointed out that the upper base (11) of the structure of the machine incorporates guides (12) acting as a stop for placing the plate and the bag or film with the dye so that it passes through the rollers (14, 15) in a straight position.

The frame (1) allows the plastic upper base (11) and the metallic side base (6) to be attached to one another.

Lastly, the existence of a second lid (9) covering and protecting the motor (10) has been envisaged.

Having sufficiently described the nature of the present invention as well as the manner of putting it into practice, it is not considered necessary to expand on this explanation so that one skilled in the art will understand its scope and the advantages derived from it, hereby stating that within its essential nature, the invention may be carried out to practice in other embodiments which differ in detail from that indicated by way of example and will likewise attain the protection that is sought provided that its fundamental principle is not altered, changed, or modified, the scope of protection of the present invention being solely limited by the appended claims.

## Claims

1. A portable laminating machine for hot stamping license plates, applicable for hot stamping characters on license plates, particularly alphanumerical characters or signs included in said plates which may be smooth or have been previously subjected to an embossing process for creating embossed characters or signs, by means of temperature and pressure transmission through a bag or film containing dyes, paints, or heat-transferable metalized compounds, **characterized in that** the machine is formed as a structure of a portable nature comprising a metallic frame (1) with a rectangular prismatic configuration in which there are coupled an upper base (11) having a flat surface and made of a plastic material for positioning the plate to be stamped, and a metallic side base (6) constituting a laminating housing comprising therein, protected by a first collapsible lid (8), at least one main laminating roller (14) with a silicone surface and rotating when actuated by a motor (10) coupled to one end thereof, and thermal resistors (13) coupled on the inner face of the lid (8) such that they cover the roller (14) when the lid (8) is in a closed position; with there being a first switch (5) actuating the motor (10), a second switch (4) connecting the thermal resistors (13), a temperature controller (2), and a temperature sensor (17) located next to the roller (14).

2. The portable laminating machine for hot stamping license plates according to claim 1, **characterized in that** it comprises a second laminating roller (15) or secondary roller, located below the main laminating roller (14).

3. The portable laminating machine for hot stamping license plates according to claim 2, **characterized in that** it comprises a height adjustment mechanism (16) which allows changing the gap between the main roller (14) and the secondary roller (15).

4. The portable laminating machine for hot stamping license plates according to any of the preceding claims, **characterized in that** it comprises an auxiliary roller (7) located on the side of the laminating side base (6) through which the plate exits, preventing said plate from wobbling when it exits the machine.

5. The portable laminating machine for hot stamping license plates according to any of the preceding claims, **characterized in that** it has an emergency stop button (3) stopping the motor (10) and turning off the thermal resistors (13).

6. The portable laminating machine for hot stamping license plates according to any of the preceding claims, **characterized in that** the upper base (11) incorporates guides (12) acting as a stop for placing the plate and the bag or film with the dye so that it passes through the rollers (14, 15) in a straight position.

7. The portable laminating machine for hot stamping license plates according to any of the preceding claims, **characterized in that** it comprises a second lid (9) covering and protecting the motor (10).

## Patentansprüche

1. Tragbare Laminiermaschine zum Heißprägen von Nummernschildern, welche zum Heißprägen von Zeichen auf Nummernschildern anwendbar ist, insbesondere in den genannten Schildern beinhaltete alphanumerische Zeichen oder Symbole, welche glatt sein können oder zuvor einem Prägeprozess ausgesetzt worden sind, um geprägte Zeichen oder Symbole zu erzeugen, mittels Temperatur- und Druckübertragung über einen Beutel oder Film enthaltend Farbstoffe, Farben oder metallisierte Wärmeübertragungsverbindungen, **dadurch gekennzeichnet, dass** die Maschine als Struktur tragbarer Natur gebildet ist, umfassend einen metallischen Rahmen (1) mit einer rechteckigen prismatischen Ausbildung, in welchem eine obere Basis (11), welche eine flache Oberfläche aufweist und aus einem Kunststoffmaterial hergestellt ist, zum Positionieren des zu stempelnden Schildes, und eine metallische Seitenbasis (6) gekoppelt sind, welche ein Laminiergehäuse bilden, darin aufweisend, geschützt durch einen ersten zusammenklappbaren Deckel (8), mindestens eine Hauptlaminierrolle (14) mit einer Silikonoberfläche und welche rotiert, wenn sie von einem Motor (10) betätigt wird, welcher mit einem Ende derselben gekoppelt ist, und Heizwiderstände (13), welche mit der Innenfläche des Deckels (8) gekoppelt sind, sodass sie die Rolle (14) decken, wenn der Deckel (8) in einer geschossenen Stellung ist; wobei es einen ersten Schalter (5), welcher den Motor (10) betätigt, einen zweiten Schalter (4), welcher die Heizwiderstände (13) verbindet, eine Temperatursteuerung (2) und einen Temperatursensor (17), welcher sich neben der Rolle (14) befindet, gibt.

2. Tragbare Laminiermaschine zum Heißprägen von Nummernschildern nach Anspruch 1, **dadurch gekennzeichnet, dass** sie eine zweite Laminierrolle (15) oder sekundäre Rolle umfasst, welche sich unter der Hauptlaminierrolle (14) befindet.

3. Tragbare Laminiermaschine zum Heißprägen von Nummernschildern nach Anspruch 2, **dadurch gekennzeichnet, dass** sie einen Höhenverstellungsmechanismus (16) umfasst, welcher es erlaubt, den Spalt zwischen der Hauptrolle (14) und der sekundären Rolle (15) zu ändern.

4. Tragbare Laminiermaschine zum Heißprägen von Nummernschildern nach einem der vorhergehenden Ansprüche, **dadurch gekennzeichnet, dass** sie eine Hilfsrolle (7) umfasst, welche sich auf der Seite der seitlichen Laminierbasis (6), durch welche das Schild austritt, befindet, sodass es verhindert wird, dass das genannte Schild wackelt, wenn es aus der Maschine austritt.

5. Tragbare Laminiermaschine zum Heißprägen von Nummernschildern nach einem der vorhergehenden Ansprüche, **dadurch gekennzeichnet, dass** sie einen Nothalteknopf (3) aufweist, welcher den Motor (10) stoppt und die Heizwiderstände (13) ausschaltet.

6. Tragbare Laminiermaschine zum Heißprägen von Nummernschildern nach einem der vorhergehenden Ansprüche, **dadurch gekennzeichnet, dass** die obere Basis (11) Führungen (12) enthält, welche als Anschlag dienen, zum Platzieren des Schildes und des Beutels oder Filmes mit dem Farbstoff, sodass es/er durch die Rollen (14, 15) in einer geraden Stellung durchgeht.

7. Tragbare Laminiermaschine zum Heißprägen von Nummernschildern nach einem der vorhergehenden Ansprüche, **dadurch gekennzeichnet, dass** sie einen zweiten Deckel (9) umfasst, welche den Motor (10) deckt und schützt.

## Revendications

1. Machine de stratification portable pour l'estampage à chaud de plaques d'immatriculation, applicable pour l'estampage à chaud de caractères sur des plaques d'immatriculation, en particulier des signes ou des caractères alphanumériques inclus dans lesdites plaques qui peuvent être lisses ou avoir été préalablement soumises à un processus d'emboutissage pour créer des caractères ou des signes emboutis, au moyen de transmission de température et de pression à travers un sac ou un film contenant des teintures, peintures ou composés métallisés thermo-transférables, **caractérisée en ce que** la machine est formée comme une structure de nature portable comprenant un cadre (1) métallique avec une configuration prismatique rectangulaire dans lequel sont accouplées une base supérieure (11) ayant une surface plane et faite en matière plastique pour positionner la plaque à estamper, et une base latérale (6) métallique constituant un logement de stratification comprenant dans celui-ci, protégé par un premier couvercle (8) rabattable, au moins un rouleau de stratification principal (14) avec une surface en silicone et tournant lorsqu'actionné par un moteur (10) couplé à l'une des extrémités de celui-ci, et des résistances thermiques (13) couplées sur la face intérieure du couvercle (8) de sorte qu'elles couvrent le rouleau (14) lorsque le couvercle (8) est en position fermée ; avec l'existence d'un premier interrupteur (5) actionnant le moteur (10), d'un deuxième interrupteur (4) connectant les résistances thermiques (13), d'un régulateur de température (2) et d'un capteur de température (17) situé à côté du rouleau (14).

2. Machine de stratification portable pour l'estampage à chaud de plaques d'immatriculation selon la revendication 1, **caractérisée en ce qu'**elle comprend un deuxième rouleau de stratification (15) ou rouleau secondaire, situé sous le rouleau de stratification principal (14).

3. Machine de stratification portable pour l'estampage à chaud de plaques d'immatriculation selon la revendication 2, **caractérisée en ce qu'**elle comprend un mécanisme de réglage de hauteur (16) qui permet de changer l'écartement entre le rouleau principal (14) et le rouleau secondaire (15).

4. Machine de stratification portable pour l'estampage à chaud de plaques d'immatriculation selon l'une quelconque des revendications précédentes, **caractérisée en ce qu'**elle comprend un rouleau auxiliaire (7) situé sur le côté de la base latérale de stratification (6) à travers lequel sort la plaque, empêchant ladite plaque d'osciller lorsqu'elle sort de la machine.

5. Machine de stratification portable pour l'estampage à chaud de plaques d'immatriculation selon l'une quelconque des revendications précédentes, **caractérisée en ce qu'**elle a un bouton d'arrêt d'urgence (3) arrêtant le moteur (10) et éteignant les résistances thermiques (13).

6. Machine de stratification portable pour l'estampage à chaud de plaques d'immatriculation selon l'une quelconque des revendications précédentes, **caractérisée en ce que** la base supérieure (11) incorpore des guides (12) servant comme butée pour placer la plaque et le sac ou film avec la teinture de sorte qu'elle passe à travers les rouleaux (14, 15) en position droite.

7. Machine de stratification portable pour l'estampage à chaud de plaques d'immatriculation selon l'une quelconque des revendications précédentes, **caractérisée en ce qu'**elle comprend un deuxième couvercle (9) couvrant et protégeant le moteur (10).
